(19) Europäisches Patentamt
European Patent Office
Office européen des brevets

(11) **EP 2 336 564 A1**

(12) **EUROPEAN PATENT APPLICATION**

(43) Date of publication:
**22.06.2011 Bulletin 2011/25**

(51) Int Cl.:
*F04B 9/02* (2006.01)   *A47J 31/38* (2006.01)
*F04B 9/14* (2006.01)   *F04B 9/06* (2006.01)

(21) Application number: **09179784.5**

(22) Date of filing: **18.12.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Koninklijke Philips Electronics N.V.**
**5621 BA Eindhoven (NL)**

(72) Inventor: **Kooijker, Klaas**
**5600 AE, Eindhoven (NL)**

(74) Representative: **Damen, Daniel Martijn**
**Philips Intellectual Property & Standards**
**P.O. Box 220**
**5600 AE Eindhoven (NL)**

(54) **Mechanical constant-force fluid pump for coffee brewing apparatus**

(57)   A fluid pump (1), comprising a body (2); a piston (6), movably arranged relative to the body; a mechanical spring (4), wherein said spring is deformable between a first deformed state and a second, less deformed state; and force transfer means (8), operably connected to the body (2), the piston (6) and the spring (4) and configured such that - during operation - the spring drives the force transfer means with a spring force of magnitude $F_{sp,ftm}$ and the force transfer means drive the piston with a force of magnitude $F_{ftm,pi}$, wherein $F_{sp,ftm}$ decreases as the spring deforms from the first deformed state to the second deformed state while an amplification ratio $F_{ftm,pi} / F_{sp,ftm}$ increases. Also provided is a method for using the fluid pump.

Fig. 3

**Description**

FIELD OF THE INVENTION

The present invention relates to the field of fluid pumps, and more in particular to a mechanically driven constant-force fluid pump that is suitable for use in a coffee brewing apparatus.

BACKGROUND

Caffè espresso, or simply espresso, is a concentrated coffee beverage that may be brewed by forcing pressurized hot water through a bed of finely ground coffee. The minimum pressure needed to properly brew an espresso, getting consistent full extraction of beneficial coffee flavors, is about 9 bars (i.e. $9.10^5$ Pa). Many espresso machines use an electric pump to effect the required pressure. The act of producing a shot of espresso, however, is still often called 'pulling a shot', referring to lever espresso machines which demand pulling down a handle attached to a piston in order to force the hot water through the coffee at high pressure.

Despite the advent of espresso machines featuring electric pumps, manual espresso machines are still in demand. Manual espresso machines come in two basic types: direct piston and spring piston. With direct piston machines, an operator may manually force the water through the ground coffee by pulling a lever. The lever may first be lifted from its resting position, allowing water to flow into a brewhead, and then be pulled back down. For many operators it is difficult to maintain a large and constant force while forcing the lever down. And since a steady pressure is crucial for the result it is not considered easy to 'pull a good shot'. In spring piston machines, a spring controls the pressure. The spring may first be compressed by forcing a lever down from its resting position, thereby allowing water to flow into a brewhead. Subsequently the spring may be allowed to relax, moving the lever back up and forcing the water through the bed of coffee.

One drawback of known spring piston machines is the fact that the force exerted by the spring on the piston, and hence the pressure (and flow rate) at which water is forced through the coffee, is not uniform during a piston stroke. The pressure may for example start out at 10 bars when the spring is in its compressed state and gradually decrease to 7 bars as the spring relaxes. The pressure inconsistency (as much as the accompanying flow rate inconsistency) may adversely affect the quality of the coffee. Another drawback of known spring piston machines is the fact that they often employ a prestressed or continuously deformed spring. Such a spring is never allowed to fully relax and is constantly under tension to ensure a considerable minimum of spring force during operation. Unfortunately, the constant stress in the machine may induce creep, which in turn may impair its proper operation.

It is an object of the present invention to overcome or mitigate one or more of these drawbacks associated with known spring piston espresso machines.

SUMMARY OF THE INVENTION

According to one aspect of the invention a fluid pump is provided.
The fluid pump may comprise a body, a piston that is movably arranged relative to the body, and a mechanical spring that is deformable between a first deformed state and a second deformed state, wherein the spring in the second deformed state is less deformed than in the first deformed state. The fluid pump may further comprise force transfer means that are operably connected to the body, the piston and the spring. The configuration may be such that - during operation - the spring drives the force transfer means with a spring force of magnitude $F_{sp,ftm}$ and the force transfer means drive the piston with a force of magnitude $F_{ftm,pi}$, wherein $F_{sp,ftm}$ decreases as the spring deforms from the first deformed state to the second deformed state while an amplification ratio $F_{ftm,pi} / F_{sp,ftm}$ increases.

The pump action of the fluid pump according to the present invention, and more in particular the stroke movement of the piston, may be driven by the mechanical spring. This mechanical spring, however, may not be directly connected to the piston that pressurizes and displaces the fluid. If it were, the gradual relaxation of the mechanical spring would likely result in a diminishing force on the piston, and hence in a reduced pressure in the fluid to be displaced. Instead, the mechanical spring may be coupled to the piston through the intermediation of force transfer means. During operation, the mechanical spring may drive the force transfer means with a spring force of magnitude $F_{sp,ftm}$, which in turn may result in the force transfer means exerting a force $F_{ftm,pi}$ on the piston. As the mechanical spring moves or relaxes from its first deformed state to its second, less deformed state, which movement may correspond to the piston executing a stroke that displaces a desired fluid volume, the spring force $F_{sp,ftm}$ may naturally diminish. However, the force transfer means may be configured to at least partially compensate for this decrease in $F_{sp,ftm}$ so as to ensure that the diminishing $F_{sp,ftm}$ does not lead to a correspondingly smaller $F_{ftm,pi}$.

In one embodiment, the force driving the piston may be kept at or proximate to its initial value, that is the value of $F_{ftm,pi}$ when the mechanical spring is in its first deformed state. More precisely, $F_{ftm,pi}$ may preferably remain within 15%, and more preferably within 10% of this initial value as the mechanical spring deforms from the first deformed state to the second deformed state in order to provide for an acceptable level of force consistency. The deformation of the mechanical spring from the first deformed state to the second deformed state may preferably correspond to at least 90%, and more preferably at least 95% of a full stroke length of the piston to ensure approximate pressure constancy over nearly a full piston stroke.

In another embodiment, the fluid pump is configured such that the mechanical spring is allowed to force itself into a substantially relaxed state.

When the mechanical spring of the fluid pump is in a deformed or unrelaxed state, it may exert a spring force on the components that it is connected to, e.g. the force transfer means and possibly also the body. Ideally, this state of deformation is brought about just before starting a piston stroke and ended upon completion thereof, such that after using the fluid pump no spring force is maintained. In case the mechanical spring is not allowed to fully relax upon completion of a piston stroke, the permanent spring force that is maintained may continue to act on the aforementioned components. This may lead to their permanent deformation, in particular through creep, which in turn may impair the operation of the fluid pump. A fluid pump featuring a relaxable mechanical spring may also facilitate the production process as the spring does not need to be prestressed upon assembly.

In one embodiment of the fluid pump, the force transfer means may comprise at least one member that - during operation - is subjected to a first force couple whose magnitude is approximately proportional to $F_{sp,ftm}$ according to $C_1 \cdot F_{sp,ftm}$, $C_1$ being a first proportionality factor, and a second substantially oppositely directed force couple whose magnitude is approximately proportional to $F_{ftm,pi}$ according to $C_2 F_{ftm,pi}$ $C_2$ being a second proportionality factor. A ratio $C_1 / C_2$ may increase as the spring deforms from the first deformed state to the second deformed state.

The operation of the force transfer means, whose primary task is to increasingly amplify the diminishing spring force $F_{sp,ftm}$ in order to deliver a relatively large and preferably virtually constant piston driving force $F_{ftm,pi}$, may be theoretically based on the concept of moments. As one skilled in the art will appreciate, a moment is the tendency of a force to rotate an object about an axis. The magnitude of the moment is given by the product of the magnitude of the force and the perpendicular distance between the line of action of the force and the axis. Practically, this means that moment of a given magnitude may be delivered by a force of any magnitude, provided that the perpendicular distance between its line of action and the respective axis is chosen properly. This perpendicular distance is often referred to as the 'moment arm'. Forces may combine to form a force couple, i.e. a system of forces with a resultant moment but no resultant force. A simple force couple may for example consist of two equal and opposing forces whose lines of action do not coincide. The magnitude of the resultant moment of the simple force couple is given by the product of the magnitude of either of the forces and the perpendicular distance between the lines of actions. Thus, again, smaller forces may be compensated for by a larger distance, in this case the perpendicular distance between the lines of action. By analogy with the term 'moment arm', the perpendicular distance between the lines of action of two opposing forces of a force couple may be referred to as 'force couple arm'. As will be clarified further below with reference to the drawings, the force transfer system of the fluid pump may be set up such that both $F_{sp,ftm}$ and $F_{ftm,pi}$ act as force couple-forces of opposing, nearly balancing force couples whose associated force couple arms increase and decrease, respectively, as the mechanical spring deforms from its first deformed state to its second deformed state. Accordingly, $F_{ftm,pi}$ may be kept at or close to a desired value even though $F_{sp,ftm}$ gradually decreases.

According to another aspect of the present invention a coffee brewing apparatus, e.g. an espresso machine, is provided. The apparatus may include a fluid pump according to the aforementioned aspect of the invention, thus allowing water to be forced through a bed of finely ground coffee at a constant or at least nearly constant pressure.

An advantage of the a coffee brewing machine fitted with a mechanical pump according to the present invention is the fact that it is capable of producing a large, constant or nearly constant pressure as it forces hot water through the coffee, while at the same time, it is both less costly to manufacture and generally lighter than coffee brewing machines featuring an electric pump.

According to yet another aspect of the present invention, a method for pumping a fluid is provided. The method may comprise providing a fluid pump according to an embodiment of the invention, and deforming the mechanical spring of the fluid pump into its first deformed state. The method may further comprise providing a body of fluid in contact with the piston of the fluid pump, and allowing the mechanical spring to deform from its first deformed state to its second, less deformed state, so as to force the piston through a stroke motion that pressurizes and displaces said body of fluid.

These and other features and advantages of the invention will be more fully understood from the following detailed description of certain embodiments of the invention, taken together with the accompanying drawings, which are meant to illustrate and not to limit the invention.

BRIEF DESCRIPTION OF THE DRAWINGS

Fig. 1 is a schematic side view of a first exemplary embodiment of a fluid pump according to the present invention, showing the fluid pump in a start position ready to execute a piston stroke;

Fig. 2 is a schematic side view of the first exemplary embodiment of the fluid pump shown in Fig. 1, showing the fluid pump in a final rest position after executing a piston stroke;

Fig. 3 is a schematic side view of a second exemplary embodiment of a fluid pump according to the present invention, showing the fluid pump in a start position ready to execute a piston stroke; and

Fig. 4 is a schematic side view of the second exemplary embodiment of the fluid pump shown in Fig. 3, showing the fluid pump in a final rest position after executing a piston stroke.

## DETAILED DESCRIPTION

The fluid pump according to the present invention may comprise a body, a piston and a mechanical spring. The fluid pump may further comprise force transfer means that interconnect the body, the piston and the spring. These elements of the fluid pump will be briefly elucidated in turn.

The body may be a substantially rigid structure made of any suitable material, e.g. plastic or metal. In practical embodiments the body of the fluid pump may form at least part of a housing of the fluid pump and/or the apparatus in which the fluid pump is incorporated. The body may be static in the sense that is does not move, deform or otherwise actively participate in the pump action. At the same time, however, the body may passively provide for reaction forces, for example enabling the force transfer means to react against the body while pushing the piston through a stroke motion. In some embodiments the body may provide for one or more constraints that guide the movement of one or more of the other elements of the fluid pump. The body may for example include a cylindrical bore for the piston that defines and constrains its stroke direction.

The piston may serve to pressurize a fluid in a vessel, and more in particular to displace or eject said fluid from the vessel through a discharge opening provided therein. The vessel may be a cylinder in which the piston is located. In such a case, the connection between the cylinder and the piston may be made suitably fluid-tight by means of piston rings. It is noted, however, that the term piston as used in this text is to be construed broadly. It intends to include any element that transfers force from the force transfer means to a fluid in a vessel or container for the purpose of expelling it therefrom.

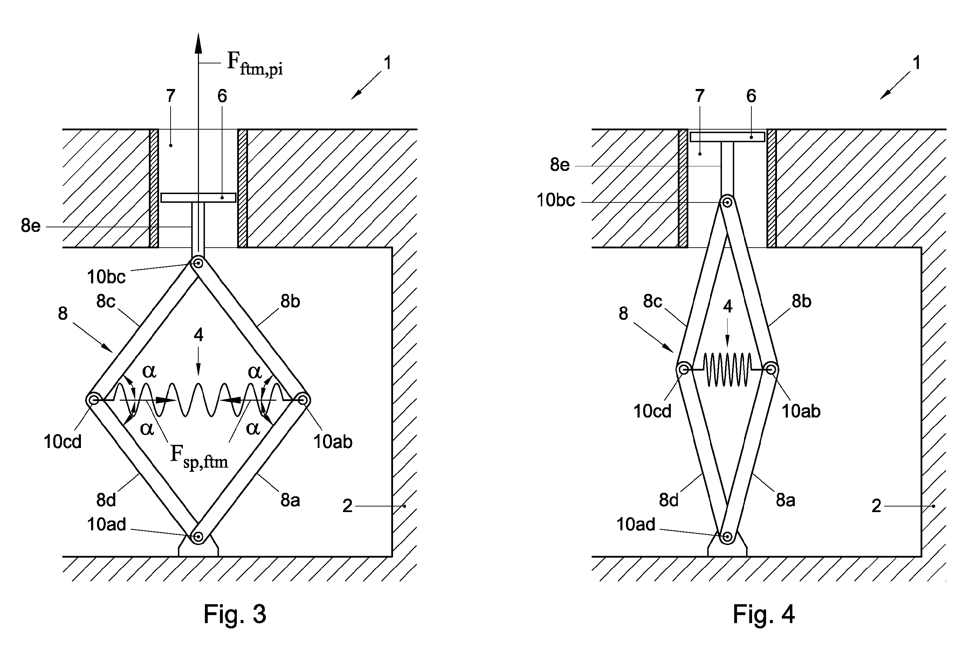

The mechanical spring may be any suitable type of mechanical spring, including for example coil springs (both compression and tension coil springs), torsion springs and gas springs. In one embodiment of the fluid pump according to the invention, the spring may interconnect the body and the force transfer means. In another embodiment, the spring may be connected to the force transfer means only. Although one mechanical spring may suffice to drive the fluid pump, it is contemplated that in some embodiments multiple springs may be employed. A one-spring design is preferred, however, so as to keep the design simple and economically manufacturable. With regard to the terminology used in this text, it is noted that the terms 'first deformed state' and 'second, less deformed state' may typically refer to a compressed and a less compressed state, or to an extended and a less extended state of the mechanical spring. It is further noted that where this text refers to the spring force $F_{sp,ftm}$ that drives the force transfer means, the (magnitude of the) spring force itself is meant. That is to say, $F_{sp,ftm}$ may typically be the force with which two (end) portions of the spring are either forced apart or pulled together, and $F_{sp,ftm}$ is not necessarily to be construed as the net force experienced by the force transfer means as a direct result of the action of the spring. For example, in case the mechanical spring is an elongated coil spring whose ends are both connected to the force transfer means (cf. the second exemplary embodiment of Figs. 3 and 4), the net force experienced by said force transfer means as a result the of action of the spring is mathematically zero and independent of the state of deformation of the spring.

In practice, the fluid pump may be equipped with spring loading means that enable deformation of the mechanical spring so as to force it in its first deformed state. To uphold the mechanical nature of the fluid pump the spring loading means may preferably be man-powered. Such means may for example include a manually operated lever of a conventional design. Alternatively, the spring loading means may be configured to load the spring by means of tap water pressure. In this latter case, the spring loading means may include a connection to the water mains, and a lever assembly that may be activated by the pressure supplied by the water mains.

The force transfer means may typically comprise a frame, including a number of substantially rigid rod-like members whose ends may be connected at pin joints referred to as nodes. Because of the pin joints, the frame may allow for constrained movement of one rod-like member relative to another, wherein the precise nature of the allowed movement may depend on the geometry of the frame. Although frames of the type described may be reliable and manufactured economically, it is contemplated that other types of force transfer means may be used to transfer forces from the mechanical spring to the piston.

Attention is now invited to two exemplary embodiments of a mechanical fluid pump according to the present invention.

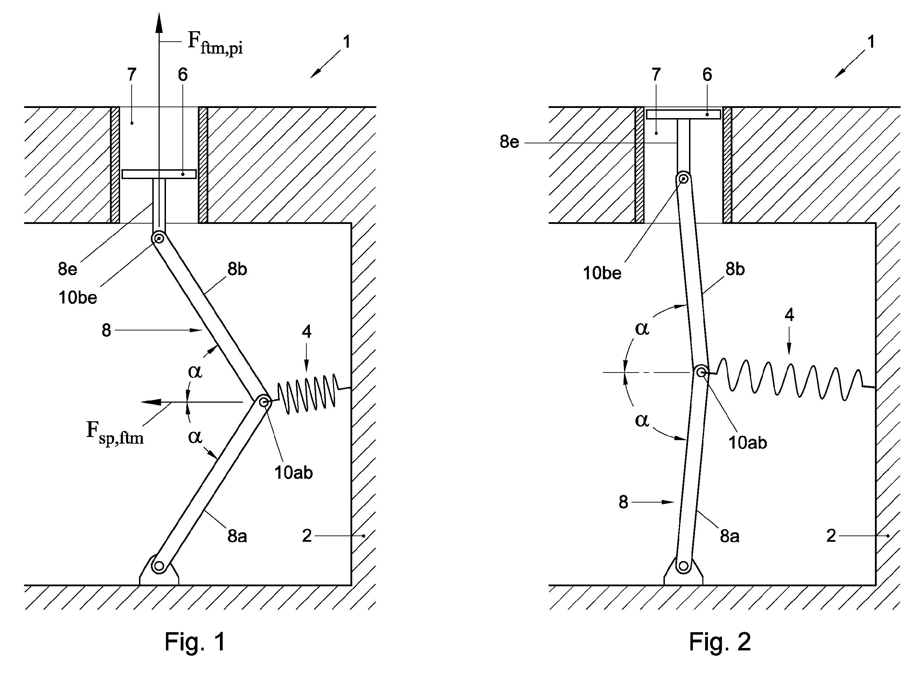

Figs. 1 and 2 are schematic side views of a first exemplary embodiment of a fluid pump 1. The fluid pump 1 comprises a body 2, a mechanical spring 4, a piston 6 and force transfer means 8. The force transfer means 8 include three elongate rod-like members 8a, 8b and 8e of which at least members 8a and 8b are structurally identical. A first, lower end of member 8a is pivotally connected to the body 2 while a second, upper end is pivotally connected to a first, lower end of member 8b. A second, upper end of member 8b is further pivotally connected to (piston rod) member 8e, which in turn (rigidly) connects to the piston 6. The spring 4 is provided in between a joint 10ab, at which members 8a and 8b are connected, and the body 2.

In Fig. 1 the fluid pump 1 is shown in its start position, ready to execute a piston stroke wherein piston 6 is moved upward through cylinder 7. During the upward stroke of the piston 6 any fluid present in the cylinder 7 may be ejected there from. The start position of the fluid pump 1 is marked by the fact that mechanical spring 4 is compressed and in its first deformed state.

To aid in understanding the operation of the fluid pump 1 shown in Figs. 1 and 2, the situation shown in Fig. 1 will be analyzed here in some detail. In Fig. 1, the compressed mechanical spring 4 exerts a substantially leftwardly directed spring force $F_{sp, fmt}$ on the node 10ab of the force transfer means 8. For clarity of exposition the spring force $F_{sp, fmt}$ will be assumed to be perfectly horizontal, which is an acceptable approximation given the relatively small deviation between the horizontal and the line of action of the actual spring force. Due to the action of the force transfer means 8, the spring force $F_{sp, fmt}$ translates into an upwardly directed force $F_{ftm, pi}$ exerted on member 8e and hence on the piston 6. The relation between the two forces is given by:

$$F_{ftm, pi} = (1/2) \cdot F_{sp, fmt} \cdot \tan(\alpha) \tag{1}$$

Relation (1) may be understood as follows. The situation shown in Fig. 1 is static and in equilibrium. Consequently, member 8b neither experiences a net force, nor a net moment. This means that all forces acting on member 8b must cancel each other. Four such forces may be identified. A first force may be due to the mechanical spring 4 that acts on the lower end of member 8b to push it leftward. The magnitude of the leftward force experienced by the lower end of member 8b is equal to (1/2). $F_{sp, fmt}$; the factor (1/2) is due to the fact that the spring force $F_{sp, fmt}$ is symmetrically distributed over both member 8a and member 8b. The leftward force on the lower end of member 8b must, by virtue of the state of equilibrium, be matched by an equally large but oppositely directed force. This second and rightwardly directed force (not shown) is exerted on the upper end of member 8b by member 8c, at node 10bc. The two horizontal forces acting on member 8b form a clockwise force couple $M_1$ with a magnitude:

$$M_1 = ((1/2) \cdot F_{sp, fmt}) \cdot (L \cdot \sin(\alpha)) \tag{2}$$

wherein L is the length of member 8b, and (L.sin($\alpha$)) equals the vertical distance between the horizontal lines of action of the two opposing forces with magnitude ((1/2) . $F_{sp, fmt}$).

In a similar manner two other forces acting on member 8b may be identified. The third force is the downward force exerted on the upper end of member 8b by member 8c. Physically this force is a reaction force caused by the resistance of the piston 6 to movement through the cylinder 7; its magnitude is $F_{fmt, pi}$. Again, by virtue of the equilibrium, this downward force must be balanced by a fourth force that is equally large but oppositely directed. This fourth force is exerted on the lower end of member 8a. The two vertical forces acting on member 8b thus form a counter-clockwise force couple $M_2$ with a magnitude:

$$M_2 = F_{fmt,pi} \cdot (L \cdot \cos(\alpha)) \tag{3}$$

In equilibrium $M_1$ and $M_2$ must equal each other, and equating relation (2) and (3) yields relation (1).

Equations (1), (2) and (3) provide some insight into the operation of the fluid pump 1 shown in Figs. 1 and 2, in particular when the masses and accelerations of the components of the pump may be considered relatively small. When fluid is allowed to be slowly expelled from cylinder 7, the compressed spring 4 will power the force transfer means 8, which in turn will force the piston 6 through the cylinder 7. Spring 4 will gradually relax from its loaded or compressed state, as shown in Fig. 1, towards its second, less deformed state, and eventually to its undeformed relaxed state as shown in Fig. 2. During this process, the force $F_{sp,fmt}$ exerted by the spring 4 will gradually decrease. At the same time, however, the angle $\alpha$ enclosed between the horizontal and member 8b will gradually increase. The diminishing spring force $F_{sp,fmt}$ and the increasing angle $\alpha$ have opposite effects on the resulting force $F_{fmt,pi}$ experienced by the piston 6, as is illustrated by relation (1). The force $F_{fmt,pi}$ exerted on the piston 6 may therefore be kept at or close to its initial value during virtually the entire piston stroke, provided that the spring characteristics of spring 4 *and* the angle α-range involved in the deformation of the spring are suitably chosen.

Fig. 3 and 4 are schematic side views of a second exemplary embodiment of a fluid pump 1 according to the present invention. In this second exemplary embodiment, the force transfer means 8 comprise an articulated parallelogram structure, including four identical elongate and substantially rigid rod-like members 8a, 8b, 8c and 8d. The parallelogram structure has four nodes 10ab, 10bc, 10cd and 10ad. Node 10ad is pivotally connected to the body 2, such that members 8a and 8d can pivot relative to both each other and the body. Node 10bc is disposed opposite to node 10ad, and is pivotally connected to a (piston rod) member 8e, which in turn is rigidly connected to the piston 6. As before, the piston 6 is slidably movable in a cylinder 7. The oppositely disposed nodes 10ab and 10cd are interconnected by a mechanical tension spring 4 that exerts a horizontal force of magnitude $F_{sp,\,ftm}$ on both said nodes. The force exerted on node 10ab is directed to the left, while that exerted on node 10cd is directed to the right. In Fig. 3 the fluid pump 1 is shown in its start position, while in Fig. 4 it is shown at the end of a piston stroke.

Through an analysis similar to that discussed above for the first exemplary embodiment, the following equation may be obtained for the relationship between the spring force $F_{sp\cdot ftm}$ and the force $F_{ftm,pi}$ exerted by the node 10bc on the piston rod 8e and the piston 6:

$$F_{ftm,pi} = F_{sp,ftm} \cdot \tan(\alpha) \qquad\qquad (4)$$

An advantage of the second exemplary embodiment over the first exemplary embodiment is that the body 2 is exposed to a smaller sum of reaction forces. This is due to the fact that the spring force $F_{sp,\,fmt}$ is no longer directly transferred to the body 2 , but merely works within the parallelogram structure of the force transfer means 8. Another advantage is apparent from a comparison between relations (1) and (4): the amplification ratio $F_{ftm,pi}/F_{sp,ftm}$ of the second exemplary embodiment is greater than of the first exemplary embodiment, namely twice as large. A third advantage is of the second exemplary embodiment relative to the first exemplary embodiment is that the force transfer means 8, as a result of their improved symmetry, may be less likely to cause tilting or slanting of the piston rod 8e and the piston 6 within the cylinder 7, which may facilitate smoother operation of the fluid pump 1.

The fluid pump according to the present invention may be applied in a variety of devices that require a fluid to be displaced at a constant pressure and/or at a constant flow rate. Such devices include coffee brewing machines, tank-based water dispensers and cisterns. These latter devices may typically suffer from a decreasing water outflow rate as the water level in the tank or cistern decreases. For the user of a water dispenser this means he will have to wait gradually longer for his cup to be filled. For the toilet, the cleaning action of the water on the lavatory pan gradually diminishes during flushing. The fluid pump according to the present invention may provide for a an improvement in these and similar situations by keeping the outflow pressure and/or outflow rate of the respective devices close to a desired level.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

**Claims**

1.   A fluid pump (1), comprising:

- a body (2);
- a piston (6), movably arranged relative to the body;
- a mechanical spring (4), wherein said spring is deformable between a first deformed state and a second, less deformed state; and
- force transfer means (8), operably connected to the body (2), the piston (6) and the spring (4) and configured such that - during operation - the spring drives the force transfer means with a spring force of magnitude $F_{sp,ftm}$ and the force transfer means drive the piston with a force of magnitude $F_{ftm,pi}$, wherein $F_{sp,ftm}$ decreases as the spring deforms from the first deformed state to the second deformed state while an amplification ratio $F_{ftm,pi}$ / $F_{sp,ftm}$ increases.

2. The fluid pump according to claim 1, wherein $F_{ftm,pi}$ remains within 15% of its initial value as the mechanical spring (4) deforms from the first deformed state to the second deformed state, said initial value being the value of $F_{ftm,pi}$ when the mechanical spring is in its first deformed state.

3. The fluid pump according to any of the claims 1-2, wherein the force transfer means (8) are configured to force the piston (6) through at least 90% of a full stroke as the mechanical spring (4) deforms from the first deformed state to the second deformed state.

4. The fluid pump according to any of the claims 1-3, configured such that the mechanical spring (4) is allowed to force itself into a substantially relaxed state.

5. The fluid pump according to any of the claims 1-4, wherein the force transfer means (8) comprise at least one member (8a, 8b, 8c, 8d) that - during operation - is subjected to a first force couple whose magnitude is approximately proportional to $F_{sp,ftm}$ according to $C_1 \cdot F_{sp,ftm}$, $C_1$ being a first proportionality factor, and a second substantially oppositely directed force couple whose magnitude is approximately proportional to $F_{ftm,pi}$ according to $C_2 \cdot F_{ftm,pi}$, $C_2$ being a second proportionality factor, and wherein a ratio $C_1 / C_2$ increases as the spring (4) deforms from the first deformed state to the second deformed state.

6. The fluid pump according to any of the claims 1-5, wherein the force transfer means (8) comprise an articulated parallelogram structure, said structure having four nodes (l0ab, 10bc, 10cd, 10ad), a first of which (10ad) is connected to the body (2), a second of which (10bc) - disposed opposite to the first - is connected to the piston (6), and a third (10cd) and/or fourth (10ad) of which is/are connected to the mechanical spring (4).

7. A coffee brewing apparatus including a liquid pump according to any of the claims 1-6.

8. A water dispenser including a liquid pump according to any of the claims 1-6.

9. Method for pumping a fluid, comprising:

   - providing a fluid pump (1) according to any of the claims 1-6;
   - deforming the mechanical spring (4) of the fluid pump into its first deformed state;
   - providing a body of fluid in contact with the piston (6) of the fluid pump; and
   - allowing the mechanical spring (4) to deform from its first deformed state to its second, less deformed state, so as to force the piston (6) through a stroke motion that pressurizes and displaces said body of fluid.

Fig. 2

Fig. 1

Fig. 4

Fig. 3

Europäisches
Patentamt

European
Patent Office

Office européen
des brevets

# EUROPEAN SEARCH REPORT

Application Number

EP 09 17 9784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 343 460 A (GENDE JOSEPH J) 10 August 1982 (1982-08-10) | 1-5,7-9 | INV. F04B9/02 A47J31/38 F04B9/14 F04B9/06 |
| A | * abstract * * column 2, line 7 - column 3, line 14 * * column 3, line 55 - column 4, line 33 * * figures 1-4 * | 6 | |
| X | US 2007/227363 A1 (VERNA RAFFAELLO [US]) 4 October 2007 (2007-10-04) | 1-5,7-9 | |
| A | * abstract * * column 21 - column 29 * * figures * | 6 | |
| Y | GB 726 272 A (AROSIO FELICE; ERNESTO VALENTE) 16 March 1955 (1955-03-16) * page 1, line 48 - page 3, line 79 * * figures * | 1-9 | |
| Y | GB 1 592 467 A (ITT) 8 July 1981 (1981-07-08) * page 3, line 27 - line 98 * * figures 1-5 * | 1-9 | |

TECHNICAL FIELDS
SEARCHED     (IPC)

F04B
A47J

The present search report has been drawn up for all claims

| Place of search | Date of completion of the search | Examiner |
|---|---|---|
| The Hague | 15 February 2010 | Kolby, Lars |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 17 9784

This annex lists the patent family members relating to the patent documents cited in the above-mentioned European search report.
The members are as contained in the European Patent Office EDP file on
The European Patent Office is in no way liable for these particulars which are merely given for the purpose of information.

15-02-2010

| Patent document cited in search report | | Publication date | Patent family member(s) | | Publication date |
|---|---|---|---|---|---|
| US 4343460 | A | 10-08-1982 | NONE | | |
| US 2007227363 | A1 | 04-10-2007 | NONE | | |
| GB 726272 | A | 16-03-1955 | NONE | | |
| GB 1592467 | A | 08-07-1981 | CA | 1081062 A1 | 08-07-1980 |
| | | | DE | 2757047 A1 | 06-07-1978 |
| | | | ES | 465440 A1 | 16-09-1978 |
| | | | FR | 2375509 A1 | 21-07-1978 |
| | | | JP | 53082964 A | 21-07-1978 |

For more details about this annex : see Official Journal of the European Patent Office, No. 12/82